(19) Europäisches Patentamt
European Patent Office
Office européen des brevets

(11) **EP 3 967 796 B1**

(12) **EUROPEAN PATENT SPECIFICATION**

(45) Date of publication and mention
of the grant of the patent:
**29.04.2026 Bulletin 2026/18**

(21) Application number: **20836537.9**

(22) Date of filing: **03.07.2020**

(51) International Patent Classification (IPC):
*D01F 6/92* (2006.01)   *D01D 5/08* (2006.01)
*D02G 3/48* (2006.01)   *B60C 9/00* (2006.01)
*C08L 67/02* (2006.01)

(52) Cooperative Patent Classification (CPC):
(C-Sets available)
**D01F 6/92; B60C 9/0042; D01F 6/62; D02G 3/48;**
B60C 2009/0085; B60C 2009/0425; D10B 2331/04
(Cont.)

(86) International application number:
**PCT/KR2020/008738**

(87) International publication number:
**WO 2021/006561 (14.01.2021 Gazette 2021/02)**

(54) **YARN FOR TIRE CORD**

GARN FÜR REIFENKORD

FIL POUR CÂBLE DE PNEU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.07.2019 KR 20190081578**

(43) Date of publication of application:
**16.03.2022 Bulletin 2022/11**

(73) Proprietors:
• **Kolon Industries, Inc.**
**Seoul 07793 (KR)**
• **Continental Reifen Deutschland GmbH**
**30175 Hannover (DE)**

(72) Inventors:
• **LIM, Ki Sub**
**Seoul 07793 (KR)**
• **CHUNG, Il**
**Seoul 07793 (KR)**
• **PARK, Sung Ho**
**Seoul 07793 (KR)**
• **NABIH, Nermeen**
**30165 Hannover (DE)**
• **SCHUNACK, Michael**
**30165 Hannover (DE)**
• **KRAMER, Thomas**
**30165 Hannover (DE)**

(74) Representative: **Vossius & Partner**
**Patentanwälte Rechtsanwälte mbB**
**Siebertstraße 3**
**81675 München (DE)**

(56) References cited:
JP-A- 2000 170 026        JP-A- 2000 170 026
JP-A- H0 578 915         JP-A- H04 257 316
JP-A- H11 236 493        KR-A- 20110 124 440
KR-A- 20150 109 731      KR-A- 20180 079 533
US-A1- 2017 121 522

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 67/02, C08L 67/02**

**Description**

[TECHNICAL FIELD]

<u>Cross-reference to Related Application(s)</u>

This application claims the benefit of Korean Patent Application No. 10-2019-0081578 filed on July 5, 2019 and Korean Patent Application No. 10-2020-0082062 filed on July 3, 2020 with the Korean Intellectual Property Office.
This invention relates to yarn for a tire cord, a method for preparing the same, and a tire cord.

[BACKGROUND OF ART]

A tire cord is reinforcing material made of fiber that is inserted inside rubber so as to increase life, safety, ride comfort of an automobile tire. Previously, tire cords made by weaving cotton yarn were known, but they are sensitive to friction, and thus, in order to overcome such a limitation, various materials have been developed, and currently, tire cords such as rayon, nylon, polyester, and the like or tire cords made of steel are being used.
Polyester fiber used as a tire cord is prepared by a method of melt spinning polymer resin chips obtained through solid phase polymerization, and the like. Wherein, in order to manifest fiber tenacity required in a tire cord, ultrahigh molecular weight polymer having higher molecular weight is used, and in case such ultrahigh molecular weight polymer is used, a shear rate or process temperature should necessarily be increased so as to increase melt flowability. However, in this case, a part of main chains of polyester are thermally decomposed, and thus, the molecular weight of fiber itself or other properties may be significantly deteriorated, and overstrain is continuously generated in a spinning device, and thus, efficiency of the preparation process may be lowered, or tenacity of prepared polyester fiber may not be improved as much as desired. JP 2000-170026 A discloses polyester tire-cord yarns and cords with specified denier, draw ratios and high tenacity, focusing on improving strength and fatigue resistance of PET tire-cords. JP H04-257316 A relates to polyester reinforcement yarns or cords for rubber articles such as tires, heavy cloth, a seat belt, a rope, sports clothing, aiming to improve lightweight and strength. JP H05-78915 A discloses high-tenacity polyester industrial yarns and cords (including tire or belt cords) with specified intrinsic viscosities, fineness and strength/elongation, in the field of PET reinforcement fibers.

[DETAILED DESCRIPTION OF THE INVENTION]

[TECHNICAL PROBLEM]

It is on object of the invention to provide yarn for a tire cord wherein melt viscosity change according to shear rate change is not large, which exhibits excellent formability, and yet, can realize relatively high molecular weight and tenacity.
It is yet another object of the invention to provide a tire cord manufactured from the yarn for a tire cord.

[TECHNICAL SOLUTION]

There is provided herein yarn for a tire cord comprising: polyethyleneterephthalate multifilament obtained by melting and spinning a resin composition comprising first polyethyleneterephthalate and second polyethyleneterephthalate having different intrinsic viscosities, wherein the yarn for a tire cord has weight average molecular weight of 90,000 g/mol or more and polydispersity index of 1.9 to 2.3, and has tenacity of 8.0 gf/d or more, or 10.00 gf/d or more.
There is also provided herein an automobile tire comprising the tire cord manufactured from the yarn for a tire cord.
According to one embodiment of the invention, there is provided yarn for a tire cord comprising: polyethyleneterephthalate multifilament obtained by melting and spinning a resin composition comprising first polyethyleneterephthalate and second polyethyleneterephthalate having different intrinsic viscosities, wherein the yarn for a tire cord has weight average molecular weight of 90,000 g/mol or more and polydispersity index of 1.9 to 2.3, and has tenacity of 8.0 gf/d or more, or or 10.00 gf/d or more.
If polyester resin chip having high intrinsic viscosity is used, due to the high viscosity, melting is difficult during a spinning process, and due to pressure increase, failure of a manufacturing device may be generated. To the contrary, if polyester resin chip having low intrinsic viscosity is used, there is a limit to the manifestation of fiber tenacity. Particularly, in case PE resin having high intrinsic viscosity is spun, viscosity may be lowered, draw ratio should be increased so as to obtain high tenacity fiber, and it is known that shrinkage rate of yarn increases and dimensional stability is deteriorated when using Hot tube technology,.
Thus, the inventors confirmed through experiments that yarn for a tire cord prepared using polyethyleneterephthalate multifilament obtained by melting and spinning a resin composition comprising first polyethyleneterephthalate and second polyethyleneterephthalate having different intrinsic viscosities can secure high resin flowability even in high temperature processes such as melting, extrusion or spinning, and yet, prevent thermal decomposition of materials, thereby finally improving mechanical properties of the final product, and completed the invention.

And, as will be explained later, it was confirmed that a tire cord comprising the tire cord yarn of one embodiment not only has high level of tensile strength, but also can maintain tensile strength retention rate before and after fatigue resistance test at relatively high level.

Specifically, the tire cord yarn of one embodiment may have weight average molecular weight of 90,000 g/mol or more and polydispersity index of 1.9 to 2.3. and have tenacity of 8.00 gf/d or more, or 10.00 gf/d or more.

Particularly, tire cord yarn provided using polyethyleneterephthalate multifilament obtained by melting and spinning a resin composition comprising first polyethyleneterephthalate and second polyethyleneterephthalate having different intrinsic viscosities has relatively broad polydispersity index, and thus, broader molecular weight distribution degree, and thereby, low molecular weight may provide initial melt flowability, and high molecular weight may decrease thermal decomposition by delaying melting due to high melting point.

And, melt viscosity of the tire cord yarn may not be so high even in the low shear rate region at a temperature of 300°C or less, and even if the shear rate increases, melt viscosity may not be significantly lowered, thus securing mechanical properties as well as sufficient formability.

More specifically, the rate of melt viscosity at a temperature of 290°C and a shear rate of 2000/s to melt viscosity at a temperature of 290°C and a shear rate of 50/s of the tire cord yarn may be 50% or less, or 30 to 50%.

And, the rate of melt viscosity at a temperature of 290°C and a shear rate of 2000/s to melt viscosity at a temperature of 290°C and a shear rate of 50/s of the resin composition may be 50% or less, or 30 to 50%.

And, the tire cord yarn may have broad polydispersity index of 1.9 to 2.3, and yet, have high weight average molecular weight of 90,000 g/mol or more, thereby realizing high tenacity of 8.00 gf/d or more, or 10.00 gf/d or more.

Meanwhile, the polyethyleneterephthalate multifilament may be obtained by melting and spinning a resin composition comprising first polyethyleneterephthalate and second polyethyleneterephthalate having different intrinsic viscosities.

The resin composition may also have melting properties equivalent to those of the tire cord. More specifically, the resin composition may have melt viscosity of 4,000 to 4,800 poise, at a temperature of 290°C and a shear rate of 50/s, and melt viscosity of 2,800 to 3,200 poise, at a temperature of 290°C and a shear rate of 1000/s.

Since the melt viscosity of the resin composition is not so high even in the low shear rate region at a temperature of 300°C or less, spinning pack pressure may not be excessively increased, thus enabling stable spinning, and even if the shear rate increases, melt viscosity may not be significantly lowered, thereby securing mechanical properties as well as sufficient formability.

More specifically, a difference between melt viscosity at a temperature of 290°C and a shear rate of 50/s and melt viscosity at a temperature of 290°C and a shear rate of 1000/s of the resin composition may be 1,800 poise or less.

And, the resin composition may have weight average molecular weight of 90,000 g/mol or more, Z average molecular weight of 125,000 to 132,000, and polydispersity index of 2.150 to 2.300.

Since the resin composition has high Z-average molecular weight, it may have relatively broad polydispersity. Thus, the resin composition may secure initial melt flowability of low molecular weight polymer, and simultaneously, decrease thermal decomposition by delaying melting due to high melting point of high molecular weight polymer. And, since thermal decomposition may be decreased, the resin composition may have higher weight average molecular weight and high tenacity.

Meanwhile, the resin composition may comprise first polyethyleneterephthalate and second polyethyleneterephthalate having different intrinsic viscosities.

More specifically, the resin composition may comprise first polyethyleneterephthalate having intrinsic viscosity of 0.80 dl/g to 1.40 dl/g, and second polyethyleneterephthalate having intrinsic viscosity of 1.50 dl/g to 1.90 dl/g. And, the first polyethyleneterephthalate may have intrinsic viscosity of 1.00 dl/g to 1.25 dl/g, and the second polyethyleneterephthalate may have intrinsic viscosity of 1.65 dl/g to 1.75 dl/g.

Particularly, the resin composition has a specific content of the second polyethyleneterephthalate among the first polyethyleneterephthalate and second polyethyleneterephthalate, thereby preventing polymer flowability decrease, pack pressure increase, deterioration of durability of a spinning device, or decrease in intrinsic viscosity of prepared yarn, and the like, which are generated when using polyester with high molecular weight, and thus, can provide polyester yarn that secures high efficiency and economical utility, and yet, has high tenacity and high intrinsic viscosity, and a tire cord using the same.

Commonly, in case polyester having high intrinsic viscosity greater than 1.40 dl/g is used, a temperature in the preparation process should be sometimes increased to 300°C or more, and thereby, thermal decomposition may be accelerated and the properties of first prepared yarn may be deteriorated, and thus, it was known that the use of polyester having high intrinsic viscosity or a method of mixing the same with other kinds of polyester are limited to some degree.

To the contrary, the polymer resin composition comprises two kinds of polyester having specific intrinsic viscosities, more specifically, first polyethyleneterephthalate having intrinsic viscosity of 0.80 dl/g to 1.40 dl/g, or 1.00 dl/g to 1.25 dl/g and second polyethyleneterephthalate having intrinsic viscosity of 1.50 dl/g to 1.90 dl/g, or 1.65 dl/g to 1.75 dl/g, and comprises the second polyethyleneterephthalate in the content of 10 wt% to 40wt%, or 15 wt% to 35wt%, or 20 to 30wt%, thereby overcoming the limit according to the use of polyester having high intrinsic viscosity.

Particularly, the polymer resin composition comprises the above explained first and second polyester, and comprises the second polyester in the specific content, but the total intrinsic viscosity is not significantly lowered.

As explained above, the polymer resin composition may have appropriate flowability at a temperature of 300°C or less, thereby preventing polymer flowability decrease, pack pressure increase, deterioration of durability of spinning device or intrinsic viscosity decrease of prepared yarn, and the like in the preparation process of polyester yarn. Namely, the melt viscosity of the polymer resin composition may not be so high even in the low shear rate region at a temperature of 300°C or less, and even if shear rate increases, melt viscosity may not significantly increase, thus securing sufficient formability, and melt viscosity may not significantly decrease according to thermal decomposition of polyester.

A tire cord provided using the polymer resin composition may have relatively high weight average molecular weight, for example, weight average molecular weight of 90,000 g/molor more, or 90,000 g/mol to 150,000 g/mol.

The tire cord yarn may have maximum draw ratio of 2.0 times or more, or 2.0 to 2.30 times, or 2.1 to 2.25 times, and tenacity of 8.00 gf/d or more or 10.00 gf/d or more, or 8.00 gf/d to 12.00 gf/d.

A manufacturing method of the tire cord is not specifically limited, and for example, it may be obtained by melting and spinning the polymer resin composition. Wherein, the polymer resin composition may be molten at a temperature range of 250°C to 300°C, or 270°C to 300°C, and the initial spinning speed (1st Godet Roller, G/R) of 1000m/min to 4000m/min. or 2000m/min to 4000m/min may be applied.

The tire cord yarn may be drawn 2.0 to 2.30 times, or 2.1 to 2.25 times.

The tire cord yarn of the above embodiment may comprise polyethyleneterephthalate multifilament, and total filament number of the polyethyleneterephthalate multifilament may be 100 to 1,500, and total fineness of the tire cord yarn may be 500 to 5,000 denier.

The tire cord yarn may have number of twist per unit length of 100 TPM to 600 TPM, or 200 TPM to 480 TPM.

The shape of the tire cord yarn is not specifically limited, and specifically, 1 to 3 ply yarn having total filament number of 100 to 1,500, total fineness of 500 to 5,000 denier, and twist per unit length of 100 to 600 TPM may be included.

The tire cord yarn may be used as a body ply cord of a pneumatic tire. Thereby, it can very effectively withstand the load of the entire vehicle. However, the use of the tire cord is not limited thereto, and it may be applied for other uses such as cap ply, and the like.

Meanwhile, according to another embodiment of the invention, there is provided a tire cord comprising the yarn for a tire cord.

For the details of the tire cord yarn, the above explanations are applied.

The tire cord may be manufactured from the above explained tire cord yarn, and thus, have higher tenacity and high intrinsic viscosity.

More specifically, the tire cord yarn may have draw ratio of 2.0 to 2.5 times, and tensile strength of the tire cord measured according to ASTM D885 may be 7.5 g/d or more, or 7.5 g/d to 9.9 g/d.

And, as the draw ratio of yarn included in the tire cord is higher, tensile strength of the tire cord may become higher, and for example, when the tire cord yarn has a draw ratio of 2.1 to 2.5 times, tensile strength of the tire cord according to ASTM D885 may be 8.5 g/d or more, or 8.5 g/d to 9.9 g/d.

Meanwhile, in the case of a tire cord having relatively high tenacity, if repeated compressive strain and tensile strain are applied, tensile strength may be significantly lowered, but the tire cord may have high tensile strength, and yet, maintain tensile strength retention rate before and after fatigue resistance test at relatively high level, as explained above.

More specifically, the tire cord may have tensile strength retention rate before and after fatigue resistance test of the following General Formula 1, of 62% or more, or 62% to 75%, or 62.4% to 71%.

[General Formula 1]

Tensile strength retention rate before and after fatigue

resistance test

= Tensile strength of tire cord after fatigue resistance test

/ tensile strength of tire cord before fatigue resistance test

In the General Formula 1, the tensile strength of a tire cord may be measured according to ASTM D885 standard, and the tensile strength of a tire cord after fatigue resistance test may be tensile strength of a tire cord, measured after removing rubber after the fatigue resistance test.

The Disk fatigue resistance test is evaluated according to JIS L 1017 standard, more specifically, the fatigue resistance test is conducted by applying a temperature of 100°C, 2500 rpm and tensile compression rate of $\pm 8.0\%$ for 24 hours for a specimen prepared by vulcanizing the tire cord with rubber at a temperature of 160°C and a pressure of 20kgf for 20 minutes, using a Disk fatigue tester.

Meanwhile, the tire cord may be manufactured by steps of plying the above explained tire cord yarn to form ply yarn; and dipping the ply yarn in an adhesive solution and heat treating.

The plying step may be conducted by Z' twisting drawn yarn with total fineness of 500 to 5000 denier at a twist number of 100 to 600 TPM(twist per meter), and S' twisting 1 to 3 plies of the Z' twist yarn at 100 to 600 TPM. thus preparing ply yarn with total fineness of 500 to 15000 denier.

And, as the adhesive solution, those commonly used for manufacturing tire cord, for example, a resorcinol-formaldehyde-latex(RFL) adhesive solution may be used. And, the heat treatment process may be progressed at a temperature of 220 to 260 °C for 90 to 360 seconds, preferably at a temperature of 230 to 250 °C for 90 to 240 seconds, more preferably at a temperature of 240 to 245°C for 90 to 120 seconds. By dipping the ply yarn in the adhesive solution and heat treating under such conditions, dimensional stability of a tire cord may be further improved, and property change may be further reduced during vulcanization of a tire.

Meanwhile, according to yet another embodiment of the invention, there is provided a tire for an automobile comprising a tire cord manufactured from the tire cord yarn.

The tire may be a pneumatic tire to which the tire cord is bonded.

Wherein, a method or conditions for bonding a tire cord to the tire may be obviously determined by a person having ordinary knowledge in the art, considering the kind, material or shape of a tire, or the kind, material or shape of a tire cord bonded thereto, and the like.

Meanwhile, according to yet another embodiment there is provided a method for preparing the above explained yarn for a tire cord, comprising a step of melting and spinning a resin composition comprising first polyethyleneterephthalate and second polyethyleneterephthalate having different intrinsic viscosities at 200 to 300°C to form polyethyleneterephthalate multifilament.

To the details of the tire cord yarn, the above explanations with regard to the tire cord yarn of one embodiment may be applied.

Specific conditions of the step of melting and spinning the polymer resin composition may be determined according to the properties and kind of the finally manufactured tire cord.

For example, the polymer resin composition may be molten at a temperature range of 200°C to 300°C, or 250°C to 300°C, and the initial spinning speed (1st Godet Roller, G/R) of 1000m/min to 4000m/min may be applied.

And, the manufactured tire cord may be drawn 1.5 to 3.0 times, or 2.0 to 2.2 times.

[ADVANTAGEOUS EFFECTS]

According to this invention, there is provided yarn for a tire cord wherein melt viscosity change according to shear rate change is not so large, which has excellent formability, and yet, can realize relatively high molecular weight and tenacity.

According to this invention, there is also provided a tire for an automobile comprising the yarn for a tire cord.

[DETAILED DESCRIPTION OF THE EMBODIMENTS]

Hereinafter, the invention will be explained in more detail in the following Examples. However, these examples are presented only as the illustrations of the invention, and the invention is not limited thereby.

[Measurement method]

Hereinafter, the properties of polyethyleneterephthalate chip, polymer resin composition and yarn were respectively measured as follows.

**1. Measurement method using capillary rheometer**

Using Rheo-tester 2000 device of Gottfert company, 100g of chips were inserted in a barrel, and retained at 290°C for 5 minutes, and then, passed through outlet L/D 20mm/1mm according to shear rate (/s), thus measuring Poise (Pa · s) viscosity value.

**2. Method for measuring crystallinity**

The crystallinity of fiber was measured by density gradient column method. A density gradient fluid was prepared using light liquid with low density and heavy liquid with high density, and using standard float with known density, the density of a fiber sample was measured and the crystallinity was measured by the following Formula.

Crystallinity(Xc)(%) = [(density of fiber sample - specific density of fiber)/(crystal density of fiber - amorphous density of fiber)] x 100

* crystal density of PET : 1.457(g/cm$^3$) , amorphous density of PET : 1.336(g/cm$^3$)

3. **Method for measuring birefringence**

Birefringence of fiber was measured with polarization microscope. Using a compensator, phase difference of fiber was measured to measure birefringence.
The polarization microscope can directly measure refractive index in a parallel direction and refractive index in a vertical direction, thus measuring the difference value as birefringence.

**4. Method for measuring molecular weight**

Number average molecular weight, weight average molecular weight, and Z-average molecular weight were measured by gel permeation chromatography(GPC). Specifically, a sample was dissolved in hexafluoroisopropanol(HFIP), and then, additionally diluted with o-chlorophenol(OCP): chloroform=1:4(volume/volume) and the solution was filtered with 0.45μm membrane filter, and then, injected in Stryragel HT column ($10^3$ to $10^5$ Å) equipped in GPC device, and measured.

**5. Measurement of tenacity and elongation**

According to the method of ASTM D885, using universal testing machine (Instron Engineering Corp, Canton, Mass), tensile strength(g/d) and elongation at break(%) of PET yarn were respectively measured (initial load: 0.05 gf/d, sample length: 250 mm, testing speed: 300 mm/min)

**6. Intrinsic viscosity (I.V.)**

Intrinsic viscosity(I.V.)(dl/g) of each PET yarn was measured using capillary viscometer according to the method of ASTM D4603-96. The solvent used was a mixed solution of phenol/1,1,2,2-tetrachloroethane (60/40 wt%).

**[Examples 1 to 2 and Comparative Examples 1 to 2: Preparation of polymer resin composition]**

**[Comparative Example 1]**

Polyethyleneterephthalate chips having intrinsic viscosity of 1.20 dl/g were molten and extruded under conditions of a temperature of 290°C and a shear rate of 112.40 $S^{-1}$ to prepare strand type pellets. Wherein, load by the internal pressure of the extruder was 66%.

**[Comparative Example 2]**

Polyethyleneterephthalate chips having intrinsic viscosity of 1.20 dl/g and polyethyleneterephthalate chips having intrinsic viscosity of 1.70 dl/g were mixed at a weight ratio of 50:50, molten and extruded under conditions of a temperature of 290°C and a shear rate of 112.40 $S^{-1}$ to prepare strand type pellets. Wherein, load by the internal pressure of the extruder was 71%.

**[Example 1]**

Polyethyleneterephthalate chips having intrinsic viscosity of 1.20 dl/g and polyethyleneterephthalate chips having intrinsic viscosity of 1.70 dl/g were mixed at a weight ratio of 80:20, molten and extruded under conditions of a temperature of 290°C and a shear rate of 112.40 $S^{-1}$ to prepare strand type pellets. Wherein, load by the internal pressure of the extruder was 69%.

**[Example 2]**

Polyethyleneterephthalate chips having intrinsic viscosity of 1.20 dl/g and polyethyleneterephthalate chips having intrinsic viscosity of 1.70 dl/g were mixed at a weight ratio of 70:30, molten and extruded under conditions of a temperature of 290°C and a shear rate of 112.40 $S^{-1}$ to prepare strand type pellets. Wherein, load by the internal pressure of the extruder was 70%.

The details of the preparation of polymer resin compositions in Examples 1 to 2 and Comparative Examples 1 to 2 are as described in the following Table 1.

[Table 1]

| No | | Comparative Example1 | Comparative Example2 | Example1 | Example2 |
|---|---|---|---|---|---|
| Chip I.V. content (wt%) | 1.2dl/g | 100 | 50 | 80 | 70 |
| | 1.7dl/g | 0 | 50 | 20 | 30 |
| Ext temp. (°C) | | 200/250/280/290/280/280/280/280/290 | | | |
| Ext L/D (mm) | | 1200/32 | | | |
| Die Nozzle L/D (mm) | | 12/4 (3Holes) | | | |
| Load (%) | | 66 | 71 | 69 | 70 |
| Discharge speed (g/min) | | 300 | | | |
| Shear rate (s⁻¹) | | 112.40 | | | |

**[Experimental Example 1: Evaluation of the properties of polymer resin compositions of Examples 1 to 2 and Comparative Examples 1 to 2]**

For the polymer resin compositions used in Examples and Comparative Examples, molecular weight and melt viscosity measurement results were shown in the following Table 2.

[Table 2]

| | I.V. 1.7dl/g content (wt%) | GPC (g/mol) | | | | Melt Viscosity @ 290°C Poise (Pa · s) | | | | |
|---|---|---|---|---|---|---|---|---|---|---|
| | | Mn | Mw | Mz | PD | Shear rate (1/s) | 50 | 500 | 1000 | 2000 |
| Comparative Example1 | 0 | 41440 | 86643 | 121940 | 2.091 | | 4,081 | 3,154 | 2,748 | 2,284 |
| Example1 | 20 | 39740 | 90507 | 129970 | 2.278 | | 4,350 | 3,401 | 2,977 | 2,351 |
| Example2 | 30 | 39784 | 91105 | 131055 | 2.290 | | 4,415 | 3,456 | 3,012 | 2,394 |
| Comparative Example2 | 50 | 40044 | 92810 | 134520 | 2.318 | | 5,603 | 4,105 | 3,450 | 2,679 |

As confirmed in the Table 2, the polymer resin compositions of Examples 1 and 2 wherein polyethyleneterephthalate chips having intrinsic viscosity of 1.20 dl/g and polyethyleneterephthalate chips having intrinsic viscosity of 1.70 dl/g were mixed at a weight ratio 70:30 or 80:20, have polydispersity index of 2.278 to 2.290, melt viscosity at a temperature of 290°C and a shear rate of 50/s, of 4,000 to 4,800 poise, and melt viscosity at a temperature of 290°C and a shear rate of 1000/s, of 2,800 to 3,200 poise, wherein a difference between the melt viscosity at a temperature of 290°C and a shear rate of 50/s and melt viscosity at a temperature of 290°C and a shear rate of 1000/s was 1,800 poise or less.

Namely, the polymer resin compositions of Examples 1 and 2 have high polydispersity index compared to the composition of Comparative Example 1 having the equivalent level of number average molecular weight, and thus, high mechanical properties may be secured in the final product, and melt viscosity in the low shear rate region at a temperature of 300°C or less may not be so high, and even if shear rate increase, melt viscosity may not significantly decrease, thereby securing mechanical properties as well as sufficient formability.

To the contrary, the polymer resin composition of Comparative Example wherein polyethyleneterephthalate chips having intrinsic viscosity of 1.20 dl/g were used in the content of 100wt%, exhibits relatively low polydispersity index, and has low molecular weight, and thus, it may be difficult to secure sufficient mechanical properties in the final product.

And, in the case of the polymer resin compositions of Comparative Example 2 wherein polyethyleneterephthalate chips having intrinsic viscosity of 1.20 dl/g and polyethyleneterephthalate chips having intrinsic viscosity of 1.70 dl/g were mixed at a weight ratio 50:50, melt viscosities at a temperature of 290°C and shear rates of 50/s and 1000/s are all greater than 3,200 poise, and thus, it does not have sufficient formability, or may cause load or failure in the manufacturing device such as an extruder.

**[Example 3 to 5 and Comparative Example 3: Preparation of yarn for a tire cord]**

**[Comparative Example3]**

Polyethyleneterephthalate chips having intrinsic viscosity of 1.20 dl/g were molten and extruded under conditions of a temperature of 290°C and a shear rate of 500 to 2000 $S^{-1}$, and initial spinning speed (1st Godet Roller, G/R) of 2800m/min was applied to wind undrawn yarn, and finally, draw 2.15 times and wind, thus preparing polyester drawn yarn. Pack pressure by discharge was 92kgf/cm$^2$.

**[Example 3]**

Polyethyleneterephthalate chips having intrinsic viscosity of 1.20 dl/g and polyethyleneterephthalate chips having intrinsic viscosity of 1.70 dl/g were mixed at a weight ratio of 90:10, and molten and extruded under conditions of a temperature of 290°C and a shear rate of 500 to 2000 $S^{-1}$, and initial spinning speed (1st Godet Roller, G/R) of 2800m/min was applied to wind undrawn yarn, and finally, draw 2.15 times and wind, thus preparing polyester drawn yarn. Pack pressure by discharge was 94kgf/cm$^2$.

**[Example 4]**

Polyethyleneterephthalate chips having intrinsic viscosity of 1.20 dl/g and polyethyleneterephthalate chips having intrinsic viscosity of 1.70 dl/g were mixed at a weight ratio of 80:20, and molten and extruded under conditions of a temperature of 290°C and a shear rate of 500 to 2000 $S^{-1}$, and initial spinning speed (1st Godet Roller, G/R) of 2800m/min was applied to wind undrawn yarn, and finally, draw 2.15 times and wind, thus preparing polyester drawn yarn. Pack pressure by discharge was 92kgf/cm$^2$.

**[Example 5]**

Polyethyleneterephthalate chips having intrinsic viscosity of 1.20 dl/g and polyethyleneterephthalate chips having intrinsic viscosity of 1.70 dl/g were mixed at a weight ratio of 70:30, and molten and extruded under conditions of a temperature of 290°C and a shear rate of 500 to 2000 S$^{-1}$, and initial spinning speed (1st Godet Roller, G/R) of 2800m/min was applied to wind undrawn yarn, and finally, draw 2.15 times and wind, thus preparing polyester drawn yarn. Pack pressure by discharge was 103 kgf/cm$^2$.

**[Experimental Example 2: Measurement of properties of undrawn yarn for a tire cord]**

The details of Examples 3 to 5 and Comparative Example 3 were respectively described in the following Table 3, and the properties of each obtained undrawn yarn were described in the following Table 4.

[Table 3]

| Conditions | I.V. 1.7dl/g chip | I.V. 1.20dl/g chip | Spinning temperature | Spinning speed | Pack pressure | Maximum draw ratio |
|---|---|---|---|---|---|---|
| | wt% | wt% | °C | m/min | kgf/cm$^2$ | D/R |
| Example3 | 10 | 90 | 295 | 2800 | 94 | x2.15 |
| Example4 | 20 | 80 | | | 92 | x2.2 |
| Example5 | 30 | 70 | | | 103 | x2.13 |
| Comparative Example3 | 0 | 100 | | | 92 | x2.15 |
| - total fineness is 1000De., and the fineness of mono-filament is 4De. (applying spinneret L/D 2.1/0.7, 250H) | | | | | | |

[Table 4]

| Conditions | Intrinsic viscosity of yarn | Tenacity of yarn | Elongation of yarn | Crystallinity of yarn |
|---|---|---|---|---|
| | dl/g | gf/d | % | % |
| Example3 | 1.025 | 2.81 | 158.27 | 13.1 |
| Example4 | 1.124 | 2.92 | 151.62 | 13.4 |
| Example5 | 1.081 | 2.92 | 152.96 | 13.1 |
| Comparative Example3 | 0.951 | 2.79 | 163.92 | 12.6 |
| - Tensile strength and elongation at break of yarn were measured under conditions of initial load 0.05fg/de, sample length 250mm and tensile speed 300mm/min, according to ASTM D885, using universal testing machine of Instron. | | | | |

As shown in the Tables 3 and 4, it was confirmed that in Examples 3 to 4, compared to Comparative Example 3, similar pack pressure was exhibited, and in Examples 3 to 5, intrinsic viscosity of prepared yarn significantly increased compared to Comparative Example, and thus, tenacity and crystallinity of yarn significantly increased.

**[Experimental Example 3: Measurement of properties of drawn yarn for a tire cord]**

The details of Examples 3 to 5 and Comparative Example 3 were described in the following Table 5, and the properties of each obtained drawn yarn were described in the following Table 6.

[Table 5]

| Conditions | draw ratio | Winder speed | Tenacity of yarn | Elongation of yarn | Mw | Polydispersity index | birefringence | Crystallinity |
|---|---|---|---|---|---|---|---|---|
| | D/R | m/min | gf/d | % | g/mol | - | Δn | % |
| Example 3 | x2.0 | 5600 | 8.51 | 13.32 | 92371 | 2.0250 | 0.2095 | 50.1 |
| | X2.15 | 6020 | 10.12 | 10.51 | 93012 | 1.9755 | 0.2128 | 49.9 |
| Example 4 | x2.0 | 5600 | 8.83 | 13.01 | 94145 | 2.0008 | 0.2120 | 50.3 |
| | x2.2 | 6160 | 11.27 | 10.11 | 94971 | 1.9638 | 0.2155 | 49.8 |
| Example 5 | x2.0 | 5600 | 8.96 | 12.97 | 93618 | 2.0160 | 0.2160 | 50.1 |
| | x2.13 | 5960 | 10.31 | 10.25 | 93914 | 1.9824 | 0.2183 | 49.8 |
| Comparative Example 3 | x2.0 | 5600 | 7.91 | 13.22 | 88754 | 2.0320 | 0.2093 | 50.3 |
| | x2.15 | 6020 | 9.73 | 10.13 | 89152 | 1.9995 | 0.2115 | 50.1 |

As shown in the Table 5, the drawn yarn obtained in Example 4 exhibited maximum draw ratio up to 2.2 times, winder speed up to 6160m/min, and tenacity up to about 11.3fg/d, and thus, it can be seen that compared to tenacity of 9.73gf/d at maximum draw ratio of 2.15 times in Comparative Example 3, tenacity improved 1.5gf/d or more

And, as results of analyzing yarn of Comparative Example 3 and Examples 3 to 5 at draw ratio of 2.0 times, it was confirmed that in Examples 3 to 5, compared to Comparative Example 3, crystallinity is similar, but degree of orientation of birefringence and molecular weight increase, and molecular weight distribution is narrow.

Namely, it was confirmed that the yarn of Examples 3 to 5 can be subjected to a melting process at the same shear rate as in Comparative Example 3, and the rate of thermal decomposition significantly decreases, and thus, intrinsic viscosity of the final yarn is relatively high, and tenacity is also high.

[Example 6 to 8 and Comparative Example 4: Manufacture of tire cord]

Each drawn yarn of Examples 3 to 5 and Comparative Example 3 was Z twisted at predetermined total fineness and twist per unit length(TPM), and 2 strands of the yarn were plied to S twist yarn with the same twist multiplier, and dipped in a RFL adhesive solution, and then, dried and heat treated to prepare a PET tire cord.

Wherein, drawn yarn used, fineness of drawn yarn, twist multiplier(TM) and cord heat treatment conditions are shown in the following Table 6, and the composition of the RFL adhesive solution and drying conditions were in accordance with common PET tire cord manufacturing conditions.

[Table 6]

| Preparation of cord | Drawn yarn used | Fineness of drawn yarn (denier) | Twist per meter (TPM) | Ply | Cord heat treatment conditions |
|---|---|---|---|---|---|
| Example 6 | Example 3 | 1000 | 430 | 2 | 240~245°C, 90sec or more |
| Example 7 | Example 4 | 1000 | 430 | 2 | 240~245°C, 90sec or more |
| Example 8 | Example 5 | 1000 | 430 | 2 | 240~245°C, 90sec or more |
| Comparative Example 4 | Comparative Example 3 | 1000 | 430 | 2 | 240~245°C, 90sec or more |

[Experimental Example 4: Measurement of properties of tire cord]

For each tire cord of Examples 6 to 8 and Comparative Example 4, properties were measured as follows, and the measured properties were shown in the following Table 7.

1) Tensile strength(g/d)

Tenacity of cord was measured using universal testing machine according to ASTM D885 standard.

**2) Fatigue resistance (%)**

Each tire cord of Examples 6 to 8 and Comparative Example 4 were vulcanized with rubber under conditions of a temperature of 160°C and a pressure of 20kgf for 20 minutes to prepare a specimen. And, for the specimen, a temperature of 100°C, 2500rpm and ±8.0% tensile compression rate were applied using Disk fatigue tester (manufacturing company: UESHIMA, model name: Belt tester FT-610) to alternatively apply repeated compressive strain and tensile strain for 24 hours. And then, the rubber was removed from the specimen, and tensile strength after fatigue resistance test was measured by the same method as the above method, and based thereon, tensile strength retention rate(%) before and after fatigue resistance test was calculated

[Table 7]

| Properties of cord | Draw ratio | Tensile strength | Tensile strength after fatigue resistance test | Tensile strength retention rate before and after fatigue resistance test |
|---|---|---|---|---|
| Unit | (D/R) | (g/d) | (g/d) | (%) |
| Example 6 | X2.0 | 7.66 | 5.37 | 70.1 |
|  | X2.15 | 8.80 | 5.55 | 63.1 |
| Example 7 | X2.0 | 7.95 | 5.55 | 69.8 |
|  | X2.2 | 9.61 | 6.04 | 62.8 |
| Example 8 | X2.0 | 8.06 | 5.59 | 69.3 |
|  | X2.13 | 8.82 | 5.50 | 62.4 |
| Comparative Example 4 | X2.0 | 7.12 | 4.95 | 69.5 |
|  | X2.15 | 8.27 | 5.15 | 62.3 |

As shown in the Table 7, it was confirmed that the tire cords of Examples 6 to 8 have tensile strength of 7.5 g/d or more in case the yarn of Examples 3 to 5 having draw ratio of 2.0 or more is used, and particularly, have tensile strength of 8.5 g/d or more in case yarn having draw ratio of 2.1 or more is used.

It was also confirmed that, in the case of tire cords having relatively high tenacity, tensile strength significantly decreases if repeated compressive strain and tensile strain are applied, but the tire cords of Examples 6 to 8 have high tensile strength as explained above, and yet, compared to Comparative Example 4 having relatively low tensile strength, have equivalent or more excellent tensile strength retention rate before and after fatigue resistance test.

**Claims**

1.  Yarn for a tire cord, the yarn comprising:

    polyethyleneterephthalate multifilament obtained by melting and spinning a resin composition comprising a first polyethyleneterephthalate and a second polyethyleneterephthalate having different intrinsic viscosities,
    wherein the yarn has (i) a weight average molecular weight of 90,000 g/mol or more, as measured by gel permeation chromatography, (ii) a polydispersity index of 1.9 to 2.3, and (iii) a tenacity of 70.6 cN/tex (8.0 gf/den) or more, as measured in accordance with ASTM D885 standard.

2.  The yarn for a tire cord according to claim 1, wherein a difference between the melt viscosity at a temperature of 290°C and a shear rate of 50/s and the melt viscosity at a temperature of 290°C and a shear rate of 1000/s of the resin composition is 180 Pa ·s (1,800 poise) or less, as measured in accordance with the method disclosed in the description.

3.  The yarn for a tire cord according to claim 1 or 2, wherein the resin composition has (i) a melt viscosity of 400 to 480 Pa·s (4,000 to 4,800 poise) at a temperature of 290°C and a shear rate of 50/s, as measured in accordance with the method disclosed in the description, and (ii) a melt viscosity of 280 to 320 Pa ·s (2,800 to 3,200 poise) at a temperature of 290°C and a shear rate of 1000/s, as measured in accordance with the method disclosed in the description.

4. The yarn for a tire cord according to claim 1, wherein the resin composition has (i) a weight average molecular weight of 90,000 g/mol or more, as measured by gel permeation chromatography, (ii) a Z average molecular weight of 125,000 to 132,000, as measured by gel permeation chromatography, and (iii) a polydispersity index of 2.150 to 2.300.

5. The yarn for a tire cord according to claim 1, wherein the resin composition comprises:

   a first polyethyleneterephthalate having an intrinsic viscosity of 0.80 dl/g to 1.40 dl/g, as measured in accordance with ASTM D4603-96 standard, and
   a second polyethyleneterephthalate having an intrinsic viscosity of 1.50 dl/g to 1.90 dl/g, as measured in accordance with ASTM D4603-96 standard.

6. The yarn for a tire cord according to claim 1 or 5, wherein an intrinsic viscosity difference between the first polyethyleneterephthalate and the second polyethyleneterephthalate is 0.3 to 0.5 dl/g, as measured in accordance with ASTM D4603-96 standard.

7. The yarn for a tire cord according to claim 1 or 5, wherein the resin composition comprises the second polyethyleneterephthalate in the content of 10 wt% to 40 wt%.

8. The yarn for a tire cord according to claim 1 or 5, wherein:

   the first polyethyleneterephthalate has an intrinsic viscosity of 1.00 dl/g to 1.25 dl/g, as measured in accordance with ASTM D4603-96 standard; and
   the second polyethyleneterephthalate has an intrinsic viscosity of 1.65 dl/g to 1.75 dl/g, as measured in accordance with ASTM D4603-96 standard.

9. The yarn for a tire cord according to claim 1, wherein:

   the total filament number of the polyethyleneterephthalate multifilament is 100 to 1,500, and
   the total fineness of the yarn for a tire cord is 55.5 to 555 tex (500 to 5,000 denier).

10. The yarn for a tire cord according to claim 1, wherein the yarn for a tire cord has a maximum draw ratio of 2.00 times or more.

11. A tire cord comprising the yarn for a tire cord according to claim 1.

12. The tire cord according to claim 11, wherein:

    the yarn for a tire cord has a draw ratio of 2.0 to 2.5 times, and
    the tensile strength of the tire cord according to ASTM D885 standard is 67.5 g/tex (7.5 g/den) or more.

13. The tire cord according to claim 11, wherein:

    the yarn for a tire cord has a draw ratio of 2.1 to 2.5 times, and
    the tensile strength of the tire cord according to ASTM D885 standard is 76.5 g/tex (8.5 g/den) or more.

14. The tire cord according to claim 11 or 13, wherein the tire cord has a tensile strength retention rate of the following General Formula 1, before and after fatigue resistance test, of 62% or more:

    [General Formula 1] Tensile strength retention rate before and after fatigue resistance test =
    Tensile strength of tire cord after fatigue resistance test / tensile strength of tire cord before     [General Formula]
    fatigue resistance test

    in the General Formula 1,

    the tensile strength of tire cord is measured according to ASTM D885 standard,
    the Disk fatigue resistance test is evaluated according to JIS L 1017 standard,
    the tensile strength of a tire cord after fatigue resistance test is tensile strength of a tire cord, measured after removing rubber after the fatigue resistance test, and

the fatigue resistance test is conducted by applying a temperature of 100°C, 2500 rpm and tensile-compression rate of ±8.0% for 24 hours for a specimen prepared by vulcanizing the tire cord with rubber at a temperature of 160°C and a pressure of 196.1 N (20 kgf) for 20 minutes, using a Disk fatigue tester.

**Patentansprüche**

1. Garn für einen Reifenkord, wobei das Garn umfasst:

   Polyethylenterephthalat-Multifilament, erhalten durch Schmelzen und Spinnen einer Harzzusammensetzung, die ein erstes Polyethylenterephthalat und ein zweites Polyethylenterephthalat mit unterschiedlichen Grenzviskositäten umfasst,
   wobei das Garn (i) ein Gewichtsmittel des Molekulargewichts von 90.000 g/mol oder mehr, wie mittels Gelpermeationschromatographie gemessen, (ii) einen Polydispersitätsindex von 1,9 bis 2,3 und (iii) eine Festigkeit von 70,6 cN/tex (8,0 gf/den) oder mehr aufweist, wie gemäß der Norm ASTM D885 gemessen.

2. Das Garn für einen Reifenkord nach Anspruch 1, wobei eine Differenz zwischen der Schmelzviskosität bei einer Temperatur von 290°C und einer Scherrate von 50/s und der Schmelzviskosität bei einer Temperatur von 290°C und einer Scherrate von 1000/s der Harzzusammensetzung 180 Pa·s (1.800 Poise) oder weniger beträgt, wie gemäß dem in der Beschreibung offenbarten Verfahren gemessen.

3. Das Garn für einen Reifenkord nach Anspruch 1 oder 2, wobei die Harzzusammensetzung (i) eine Schmelzviskosität von 400 bis 480 Pa·s (4.000 bis 4.800 Poise) bei einer Temperatur von 290°C und einer Scherrate von 50/s, wie gemäß dem in der Beschreibung offenbarten Verfahren gemessen, und (ii) eine Schmelzviskosität von 280 bis 320 Pa·s (2.800 bis 3.200 Poise) bei einer Temperatur von 290°C und einer Scherrate von 1.000/s, wie gemäß dem in der Beschreibung offenbarten Verfahren gemessen, aufweist.

4. Das Garn für einen Reifenkord nach Anspruch 1, wobei die Harzzusammensetzung (i) ein Gewichtsmittel des Molekulargewichts von 90.000 g/mol oder mehr, wie mittels Gelpermeationschromatographie gemessen, (ii) ein Z-Mittel des Molekulargewichts von 125.000 bis 132.000, wie mittels Gelpermeationschromatographie gemessen, und (iii) einen Polydispersitätsindex von 2,150 bis 2,300 aufweist.

5. Das Garn für einen Reifenkord nach Anspruch 1, wobei die Harzzusammensetzung umfasst:

   ein erstes Polyethylenterephthalat mit einer Grenzviskosität von 0,80 dl/g bis 1,40 dl/g, wie gemäß der Norm ASTM D4603-96 gemessen, und
   ein zweites Polyethylenterephthalat mit einer Grenzviskosität von 1,50 dl/g bis 1,90 dl/g, wie gemäß der Norm ASTM D4603-96 gemessen.

6. Das Garn für einen Reifenkord nach Anspruch 1 oder 5, wobei eine Grenzviskositätsdifferenz zwischen dem ersten Polyethylenterephthalat und dem zweiten Polyethylenterephthalat 0,3 bis 0,5 dl/g beträgt, wie gemäß der Norm ASTM D4603-96 gemessen.

7. Das Garn für einen Reifenkord nach Anspruch 1 oder 5, wobei die Harzzusammensetzung das zweite Polyethylenterephthalat in dem Gehalt von 10 Gew.-% bis 40 Gew.-% umfasst.

8. Das Garn für einen Reifenkord nach Anspruch 1 oder 5, wobei:

   das erste Polyethylenterephthalat eine Grenzviskosität von 1,00 dl/g bis 1,25 dl/g aufweist, wie gemäß der Norm ASTM D4603-96 gemessen; und
   das zweite Polyethylenterephthalat eine Grenzviskosität von 1,65 dl/g bis 1,75 dl/g aufweist, wie gemäß der Norm ASTM D4603-96 gemessen.

9. Das Garn für einen Reifenkord nach Anspruch 1, wobei:

   die Gesamtfilamentzahl des Polyethylenterephthalat-Multifilaments 100 bis 1.500 beträgt und
   die Gesamtfeinheit des Garns für einen Reifenkord 55,5 bis 555 tex (500 bis 5.000 Denier) beträgt.

**10.** Das Garn für einen Reifenkord nach Anspruch 1, wobei das Garn für einen Reifenkord ein maximales Streckverhältnis von dem 2,00-Fachen oder mehr aufweist.

**11.** Ein Reifenkord, umfassend das Garn für einen Reifenkord nach Anspruch 1.

**12.** Der Reifenkord nach Anspruch 11, wobei:

das Garn für einen Reifenkord ein Streckverhältnis von dem 2,0- bis 2,5-Fachen aufweist und
die Zugfestigkeit des Reifenkords gemäß der Norm ASTM D885 67,5 g/tex (7,5 g/den) oder mehr beträgt.

**13.** Der Reifenkord nach Anspruch 11, wobei:

das Garn für ein Reifenkord ein Streckverhältnis von dem 2,1- bis 2,5-Fachen aufweist und
die Zugfestigkeit des Reifenkords gemäß der Norm ASTM D885 76,5 g/tex (8,5 g/den) oder mehr beträgt.

**14.** Der Reifenkord nach Anspruch 11 oder 13, wobei der Reifenkord vor und nach der Ermüdungsbeständigkeitsprüfung eine Zugfestigkeitsretentionsrate der folgenden allgemeinen Formel 1 von 62% oder mehr aufweist:

[Allgemeine Formel 1] Zugfestigkeitsretentionsrate vor und nach der Ermüdungsbeständigkeitsprüfung = Zugfestigkeit des Reifenkords nach der Ermüdungsbeständigkeitsprüfung / Zugfestigkeit des Reifenkords vor der Ermüdungsbeständigkeitsprüfung      [Allqemeine Formel 1]

in der allgemeinen Formel 1

wird die Zugfestigkeit des Reifenkords gemäß der Norm ASTM D885 gemessen,
wird die Scheiben-Ermüdungsbeständigkeitsprüfung gemäß der Norm JIS L 1017 beurteilt,
ist die Zugfestigkeit eines Reifenkords nach der Ermüdungsbeständigkeitsprüfung die Zugfestigkeit eines Reifenkords, gemessen nach Entfernen des Kautschuks nach der Ermüdungsbeständigkeitsprüfung, und
wird die Ermüdungsbeständigkeitsprüfung durch Anwenden einer Temperatur von 100°C, 2500 UpM und einer Zug-Druck-Verformungsrate von $\pm$8,0% für 24 Stunden auf eine Probe, die durch Vulkanisieren des Reifenkords mit Kautschuk bei einer Temperatur von 160°C und einem Druck von 196,1 N (20 kgf) für 20 Minuten hergestellt wurde, unter Verwendung eines Scheiben-Ermüdungsprüfgeräts durchgeführt.

## Revendications

**1.** Fil pour un câble de pneu, le fil comprenant :

un multifilament de polyéthylène téréphtalate obtenu en fondant et en filant une composition de résine comprenant un premier polyéthylène téréphtalate et un deuxième polyéthylène téréphtalate ayant différentes viscosités intrinsèques,
dans lequel le fil a (i) un poids moléculaire moyen en poids de 90 000 g/mol ou plus, tel que mesuré par chromatographie sur gel perméable, (ii) un indice de polydispersité de 1,9 à 2,3, et (iii) une ténacité de 70,6 cN/tex (8,0 gf/den) ou plus, tel que mesuré conformément à la norme ASTM D885.

**2.** Fil pour un câble de pneu selon la revendication 1, dans lequel la différence entre la viscosité à l'état fondu à une température de 290°C et à un taux de cisaillement de 50/s et la viscosité à l'état fondu à une température de 290°C et à un taux de cisaillement de 1 000/s de la composition de résine est de 180 Pa·s (1 800 poises), ou moins, telle que mesurée conformément à la méthode divulguée dans la description.

**3.** Fil pour un câble de pneu selon la revendication 1 ou 2, dans lequel la composition de résine a (i) une viscosité à l'état fondu de 400 à 480 Pa·s (4 000 à 4 800 poises) à une température de 290°C et à un taux de cisaillement de 50/s, telle que mesurée conformément à la méthode divulguée dans la description, et (ii) une viscosité à l'état fondu de 280 à 320 Pa·s (2 800 à 3 200 poises) à une température de 290°C et à un taux de cisaillement de 1 000/s, telle que mesurée conformément à la méthode divulguée dans la description.

**4.** Fil pour un câble de pneu selon la revendication 1, dans lequel la composition de résine a (i) un poids moléculaire moyen en poids de 90 000 g/mol ou plus, tel que mesuré par chromatographie sur gel perméable, (ii) un poids moléculaire moyen Z de 125 000 à 132 000, tel que mesuré par chromatographie sur gel perméable, et (iii) un indice de polydispersité de 2,150 à 2,300.

5. Fil pour un câble de pneu selon la revendication 1, dans lequel la composition de résine comprend :

un premier polyéthylène téréphtalate ayant une viscosité intrinsèque de 0,80 dl/g à 1,40 dl/g, telle que mesurée conformément à la norme ASTM D4603-96, et
un deuxième polyéthylène téréphtalate ayant une viscosité intrinsèque de 1,50 dl/g à 1,90 dl/g, telle que mesurée conformément à la norme ASTM D4603-96.

6. Fil pour un câble de pneu selon la revendication 1 ou 5, dans lequel la différence de viscosité intrinsèque entre le premier polyéthylène téréphtalate et le deuxième polyéthylène téréphtalate est de 0,3 à 0,5 dl/g, telle que mesurée conformément à la norme ASTM D4603-96.

7. Fil pour un câble de pneu selon la revendication 1 ou 5, dans lequel la composition de résine comprend le deuxième polyéthylène téréphtalate à hauteur de 10 % en poids à 40 % en poids.

8. Fil pour un câble de pneu selon la revendication 1 ou 5, dans lequel :

le premier polyéthylène téréphtalate a une viscosité intrinsèque de 1,00 dl/g à 1,25 dl/g, telle que mesurée conformément à la norme ASTM D4603-96 ; et
le deuxième polyéthylène téréphtalate a une viscosité intrinsèque de 1,65 dl/g à 1,75 dl/g, telle que mesurée conformément à la norme ASTM D4603-96.

9. Fil pour un câble de pneu selon la revendication 1, dans lequel :

le nombre total de filaments du multifilament de polyéthylène téréphtalate est de 100 à 1 500, et
la finesse totale du fil pour un câble de pneu est de 55,5 à 555 tex (500 à 5 000 deniers).

10. Fil pour un câble de pneu selon la revendication 1, dans lequel le fil pour un câble de pneu a un rapport d'étirement maximum de 2,00 fois ou plus.

11. Câble de pneu comprenant le fil pour un câble de pneu selon la revendication 1.

12. Câble de pneu selon la revendication 11, dans lequel :

le fil pour un câble de pneu a un rapport d'étirement de 2,0 à 2,5 fois, et
la résistance à la traction du câble de pneu conformément à la norme ASTM D885 est de 67,5 g/tex (7,5 g/den) ou plus.

13. Câble de pneu selon la revendication 11, dans lequel :

le fil pour un câble de pneu a un rapport d'étirement de 2,1 à 2,5 fois, et
la résistance à la traction du câble de pneu conformément à la norme ASTM D885 est de 76,5 g/tex (8,5 g/den) ou plus.

14. Câble de pneu selon la revendication 11 ou 13, dans lequel le câble de pneu a un taux de rétention de résistance à la traction de formule générale 1 suivante, avant et après l'essai de résistance à la fatigue, de 62 % ou plus :

[Formule générale 1]

Taux de rétention de résistance à la traction avant et après l'essai de résistance à la fatigue

= Résistance à la traction du câble de pneu après l'essai de résistance à la fatigue /

Résistance à la traction du câble de pneu avant l'essai de résistance à la fatigue

dans la formule générale 1,

la résistance à la traction du câble de pneu est mesurée conformément à la norme ASTM D885,
l'essai de résistance à la fatigue sur disque est évalué conformément à la norme JIS L 1017,
la résistance à la traction d'un câble de pneu après l'essai de résistance à la fatigue est la résistance à la traction d'un câble de pneu mesurée postérieurement à l'élimination du caoutchouc après l'essai de résistance à la fatigue, et
l'essai de résistance à la fatigue est effectué en appliquant une température de 100°C, 2 500 rpm et un taux de traction-compression de ± 8,0 % pendant 24 heures pour un échantillon préparé par vulcanisation du câble de pneu avec du caoutchouc à une température de 160°C et une pression de 196,1 N (20 kgf) pendant 20 minutes, en utilisant un banc d'essai de fatigue sur disque.

**EP 3 967 796 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020190081578
- KR 1020200082062
- JP 2000170026 A
- JP H04257316 A
- JP H0578915 A